# EUROPEAN PATENT APPLICATION

(11) **EP 0 835 902 A1**
(43) Date of publication of application: **15.04.1998**
(21) Application number: 97117110.3
(22) Date of filing: 02.10.1997
(51) Int. Cl.: C08K 3/32, C08J 9/00

(54) **Flame retardant, ammonium phosphate containing polyurethane foam**

(30) Priority: 11.10.1996 IT VE960035
(71) Applicant: G. & G. S.r.l., 36060 Bassano del Grappa (IT)
(72) Inventor: Marchiorello, Giovanni, 31037 - Ramon Di Loria (IT)
(74) Representative: Piovesana, Paolo

(57) **Abstract**

Polyurethane foam, in particular rigid polyurethane foam characterised by comprising a flame retardant consisting of an ammonium phosphate-based powder of controlled particle size.

## Description

This invention relates to a polyurethane foam, in particular a rigid polyurethane foam.

In the present description a polyurethane foam is defined as either the foam obtained by reacting a stoichiometric quantity of polyisocyanates with polyols, or the foam obtained by reacting polyols with a non-stoichiometric quantity of polyisocyanates. If the polyisocyanates are in excess over the stoichiometric quantity of polyols, this type of foam is also known as polyisocyanurate foam.

Again, in the present description a rigid (or semi-rigid) foam is defined as one which is dimensionally and morphologically stable, such as that used for example as an insulant in panels in general, in contrast to a flexible and hence dimensionally and morphologically unstable foam, such as that used for example in padding in general.

Current rigid polyurethane foams, which are mainly as a thermal insulant in building and as a packaging foam, must include flame retardants among their components. A flame retardant currently used in rigid polyurethane foams is a liquid, and in particular a liquid phosphonate (for example dimethyl-methylphosphonate, which is currently the best flame retardant), or a liquid phosphate (for example triethylphosphate).

Both these flame retardants are of high cost. Moreover dimethylmethylphosphonate is very toxic and plasticizes the foam, hence representing a dimensional destabilization agent.

Consequently those polyurethane foams which use known flame retardants have an upper limit on the quantity of flame retardant usable, and high toxicity during production.

Phosphohalogenated flame retardants and halogenated polyols are also known, but during combustion these emit halogen-containing vapour and are also very costly.

These drawbacks are eliminated according to the invention by a polyurethane foam, in particular a rigid polyurethane foam as described in claim 1.

The present invention is further clarified hereinafter in terms of its general formulation together with a practical embodiment, also including reference to experimental tests carried out.

As stated, the idea on which the invention is based is to replace the traditional liquid flame retardant in a polyurethane foam with an ammonium phosphate-based powder of controlled particle size, which can be monoammonium phosphate [(NH₄)H₂PO₄], diammonium phosphate [(NH₄)₂HPO₄], or a mixture thereof.

According to the invention, the ammonium phosphate is present in a quantity of between 5 and 120% of the polyol quantity, and at least 80% of it has a particle size of less than 50 microns.

If the ammonium phosphate concentration is increased beyond 20%, it is preferable according to the invention to at least partly replace the water used as the isocyanate reactant with formic acid, which facilitates better control of the reaction dynamics.

By using ammonium phosphate and in particular diammonium phosphate as flame retardant, the following important advantages are obtained:
- low cost in that compared with traditional foams, and for substantially equal performance, an average saving of not less than 5% is achieved;
- large quantities of flame retardant can be used, so improving the dimensional stability of the foam; in this manner a product perfectly corresponding to technical specifications is obtained at lesser cost;
- a considerable reduction in fume opacity and toxicity on combustion;
- elimination particularly of toxic combustion fumes during a fire or during disposal in an incinerator, by virtue of the elimination of halogens from the polyurethane foam;
- ability to obtain open-cell foam because of the cell-breaking function performed by the ammonium phosphate when in a concentration exceeding 20% of the polyurethane; in this respect formic acid favours cell breakdown;
- improved foam insulation coefficient, because of the opacity of the ammonium phosphate powder;
- usability of the polyurethane foam as a support for vegetable cultivation, because of the presence of the ammonium phosphate, which acts as a fertilizer.

The following example will further clarify the invention:
A rigid polyurethane foam was prepared with the following formulation

| | |
|---|---|
| N-PENTANE | 11 g |
| WATER | 1,5 g |
| FORMIC ACID | 3 g |
| ISOEXTER 3340 (polyester polyol) | 100 g |
| GLYCERIN | 5 g |
| TEP (fluidifier) | 5 g |
| DIAMMONIUM PHOSPHATE (antiflame agent) | 35 g |
| AMINO CATALYST + ORGANOMETAL CATALYST | 2,0 g |
| SILICONE SURFACTANT | 1,5 g |
| LUPRANAT M20 (polymer MDI) | 164,1 g |

Panels of 30 mm thickness prepared with this formulation were subjected to usual laboratory tests. The results obtained are as follows:

| | |
|---|---|
| Foam density | 34 kg/m³ |
| Average thickness | 30 mm |

| Deformation at -25°C (test duration 48 hours): | |
|---|---|
| thickness | 0,1 % |
| sides | 0,1 % |

| Deformation at 70°C and 100% RH (test duration 48 hours): | |
|---|---|
| thickness | 0,6 % |
| sides | 0,2 % |

| Compressive strength 10% deformation: | |
|---|---|
| Load 10% | 1,2 kg/m³ |
| Initial thermal conductivity 72 hours after production | 31 mW/(m°K) |
| Thermal conductivity after ageing for 15 days at 70°C | 33 mW/(m°K) |
| Closed cell content | <10 % |

| Foam response to CSE fire FR2: | |
|---|---|
| height of damaged region | 11 cm |
| post-combustion | 0 sec |
| post-incandescence | 0 sec |
| dripping | NO |
| thread breakage | NO |
| 1st category | 1-4 |

| Foam response to CSE fire FR3: | |
|---|---|
| damaged region | 50 cm |
| post-incandescence | 0 sec |
| flame propagation velocity | >30 mm/min |
| dripping | NO |
| 2nd category | 1-4 |

| CSE fire class (FR2 and FR3): | |
|---|---|
| Foam class 2 | 1-5 |

## Claims

1. Polyurethane foam, in particular rigid polyurethane foam, characterised by comprising a flame retardant consisting of an ammonium phosphate-based powder of controlled particle size.

2. Polyurethane foam as claimed in claim 1, characterised in that the flame retardant is monoammonium phosphate [(NH₄)H₂PO₄].

3. Polyurethane foam as claimed in claim 1, characterised in that the flame retardant is diammonium phosphate [(NH₄)₂HPO₄].

4. Polyurethane foam as claimed in claim 1, characterised in that the flame retardant is a mixture of monoammonium phosphate and diammonium phosphate.

5. Polyurethane foam as claimed in claim 1, characterised by comprising diammonium phosphate in a percentage of between 5 and 120% of the weight of the polyol which forms the foam.

6. Polyurethane foam as claimed in claim 1, characterised by comprising formic acid as isocyanate reactant for correcting the reaction kinetics.

7. Polyurethane foam as claimed in claim 6, characterised by comprising formic acid in a percentage of between 0,2 and 10% of the polyol weight.

8. Polyurethane foam as claimed in claim 1, characterised in that at least 80% of the ammonium phosphate has a particle size of less than 50 microns.

9. Use of the polyurethane foam claimed in one or more of claims 1 to 8 as a support for vegetable cultivation.
